# EUROPEAN PATENT APPLICATION

(11) **EP 3 216 339 A1**
(43) Date of publication of application: **13.09.2017**
(21) Application number: 14900319.6
(22) Date of filing: 20.08.2014
(51) Int. Cl.: A01D 46/26

(54) **HARVESTER, SYSTEM FOR CONDITIONING A PLANTATION FOR HARVESTING AND METHOD FOR PREPARING A PLANTATION FOR HARVESTING**

(71) Applicant: Gonzalez-Ortega Moreno Palancas, Domingo, 13640 Herencia (Ciudad Real) (ES)
(72) Inventor: Gonzalez-Ortega Moreno Palancas, Domingo, 13640 Herencia (Ciudad Real) (ES)
(74) Representative: Garcia-Cabrerizo y del Santo, Pedro Maria
(86) International application number: PCT/ES2014/000141
(87) International publication number: WO 2016/026988

(57) **Abstract**

Fruit harvester that has devices for harvesting fruit and other, auxiliary devices for facilitating the tasks involved in harvesting. The invention also relates to a system for conditioning a plantation for harvesting and to a method for preparing a plantation for harvesting that are specifically structured in order to optimize harvesting using the harvester of the invention.

## Description

### Technical field of the invention

The present invention is in the field of harvesting machines, particularly fruit harvesters. The invention also relates to a method for preparing a plantation that is specifically structured in order to optimize harvesting using the harvester of the invention.

### Background of the invention

There are already known cereal harvesters having a comb arranged at the front of the machine, with a rotating movement around a horizontal axis, and transverse to the direction of travel of the machine, that is, the harvesting axis and the main axis of displacement of the machine are perpendicular.

As for machines for large olive trees, clamps are used that embrace the feet or trunks of the olive trees in order to vibrate them, but these machines damage the roots of the tree and the method for collecting the olives requires the cooperation of several people to help with bars, in addition to the need of preparing blankets to collect the olives.

Olive harvesters having brushes provided with hairs that strike the branches of the olive trees are also known. These brushes rotate around a vertical axis, that is to say, that the harvesting axis and the main axis of displacement of the machine are perpendicular. Another type of grape or olive harvester has a bridge configuration that passes over the plantation. These harvesters comprise a plurality of vibrating ribs on each side of the bridge in order to vibrate the branches of the plantation when harvester moves through the plantation.

However, the known grape or olive harvesters damage the branches and fruits to be harvested, leaving part of the fruit uncollected. As regards harvesters having a bridge with vibrating ribs, these machines have several drawbacks. On the one hand, they require high energy consumption for their operation: in fact, a series of ribs are usually removed to decrease the force of advance that the machine must exercise when walking the plantation.

On the other hand, they require that the plantation be ripped out before it grows sufficiently to seriously damage those ribs, since when the trunks and branches of the plantation reach a certain thickness, the ribs are damaged and broken. To pull up the plantation before the branches and trunks reach dangerous thicknesses for the ribs and to renew it with plants sufficiently young so as not to damage the ribs, but sufficiently developed in order to produce fruits, greatly increases fruit production costs.

### Description of the invention

The invention solves the disadvantages which remain unsolved in the state of the art. In addition, the invention has a number of additional advantages: it does not damage the olives or grapes, it only requires one person to harvest, the one driving the harvester, and the harvesting can be done at night.

A first aspect of the invention relates to a harvester as defined in claim 1.

The same motor used to move the harvester serves to move the harvesting means, which can be drums, an endless belt or rods provided with blades, which are the elements that pull the olives or grapes. The system of rods provided with blades can be moved by a crankshaft or driven by cams and followers. This system of rods provided with blades is complementary to the drums or belts and allows bringing down the olives that may be less accessible to the drums or belts.

A second aspect of the invention relates to a system for conditioning a plantation for harvesting as defined in claim 32.

A third aspect of the invention relates to a method for preparing a plantation for harvesting as defined in claim 37.

Additional features of the invention are defined in dependent claims.

### Brief description of the drawings

For a better understanding of the invention there is attached a set of drawings in which, by way of example only, various embodiments of the invention are shown.
Figure 1 is a side view of a first embodiment of the harvester of the invention.
Figure 2 is a rear view of a first embodiment of the harvester of the invention.
Figure 3 is a plan view of a first embodiment of the harvester of the invention.
Figure 4 is a side view of a second embodiment of the harvester of the invention.
Figure 5 is a rear view of a second embodiment of the harvester of the invention.
Figure 6 is a plan view of a second embodiment of the harvester of the invention.

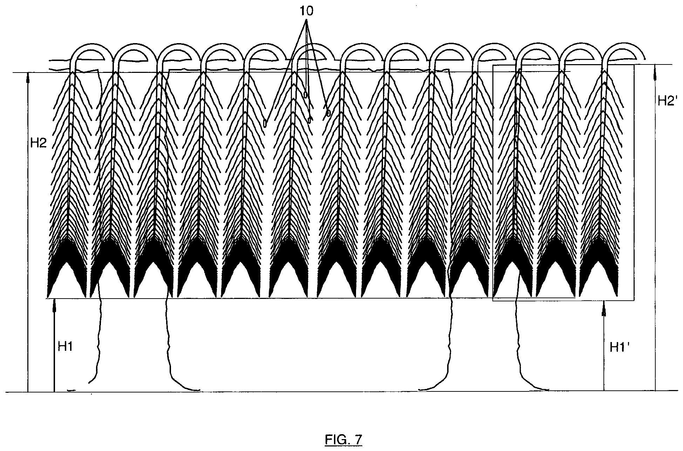

Figure 7 is an elevational view of the plantation of the invention.

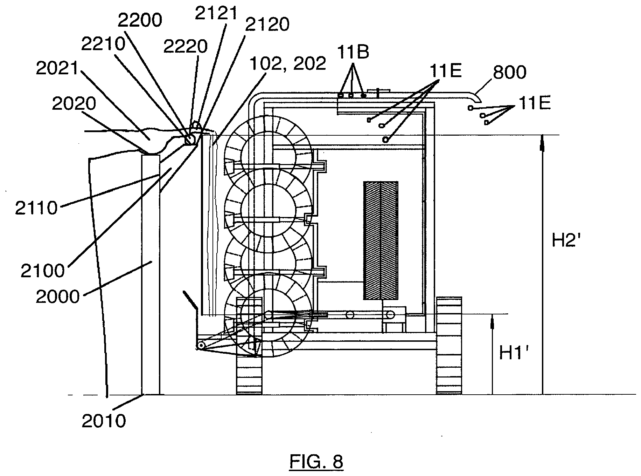

Figure 8 is a side view of the plantation and a rear view of the harvester of the invention.
Figure 9 is a diagram showing a rear view of a third embodiment of the harvester of the invention.
Figure 10 is a diagram showing a plan view of a third embodiment of the harvester of the invention.

### The references:

Main axis of displacement (1) of the harvester
First means of harvest/collection (100)
First harvesting/collection section(110)
Fruits to be harvested (10)
First driving means (105)
Harvested fruits (11)
First harvesting/collection axis (101)
First harvesting plane (102)
Second means of harvest/collection (200)
Second harvesting/collection section(210)
Second driving means (205)
Second harvesting/collection axis (201)
Second harvesting plane (202)
Lower height (H1)
Upper height (H2)
Collection means (300)
Outer wall (310)
Lateral height (HL)
Lip (320)
Accumulating means (400)
Accumulated fruits (11A)
Means of transport (500)
Pumping means (700)
Pumped fruits (11 B)
Means of evacuation (800)
Directing means (801)
Evacuated fruits (11 E)
Storage means (900)
Stored fruits (11T)
Emptying means (1000)
Emptying end (1010)
Evacuation end (1020)
Drum (120)
Contour (120C)
First base (121)
Second base (122)
First protrusions (123)
Driving pulley (130)
Driven pulley (140)
Belt (150)
Trailing section (151)
Leading section (152)
Second protrusions (153)
Rod (220)
Drive end (221)
Harvesting end (222)
Blade (240)
Bridge-shaped structure (1200)
First column (1201)
First bridge-shaped harvesting section (110^{I})
First bridge-shaped harvesting plane (102^{I})
Third bridge-shaped harvesting section (210^{III})
Third bridge-shaped harvesting plane (202^{III})
Second column (1202)
Second bridge-shaped harvesting section (110")
Second bridge-shaped harvesting plane (102")
Fourth bridge-shaped harvesting section (210^{IV})
Fourth bridge-shaped harvesting plane (202^{IV})
Main support (2000)
End of ground (2010)
End of first branch (2020)
First branch (2021)
Bracket (2100)
Supporting end (2110)
End of second branch (2120)
Second branch (2121)
Longitudinal support (2200)
Bracket section (2210)
Second branch section (2220)
Screen (2300)
Lower screen height (H1')
Upper screen height (H2')

### Description of a preferred embodiment

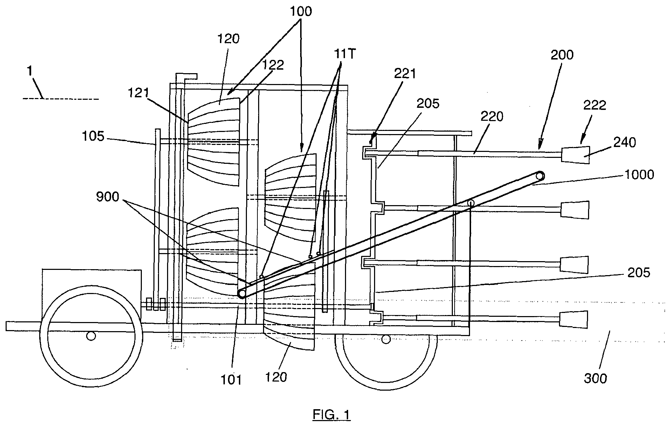

A first embodiment of the invention illustrated in Figures 1-3 relates to a harvester comprising:
1a) a main axis of displacement (1) of the harvester;
1b) first means of harvesting/collection (100) comprising:
   1b1) a first harvesting/collection section (110) configured to be facing a plantation comprising fruits to be harvested (10);
   1b2) first driving means (105) for moving the first harvesting/collection section (110) and obtain harvested fruits (11);
wherein:
1d) the first means of harvesting/collection (100) comprises a first harvesting/collection axis (101) parallel to the main axis of displacement (1).

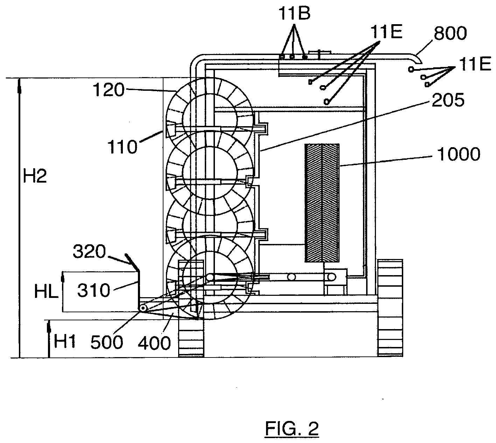

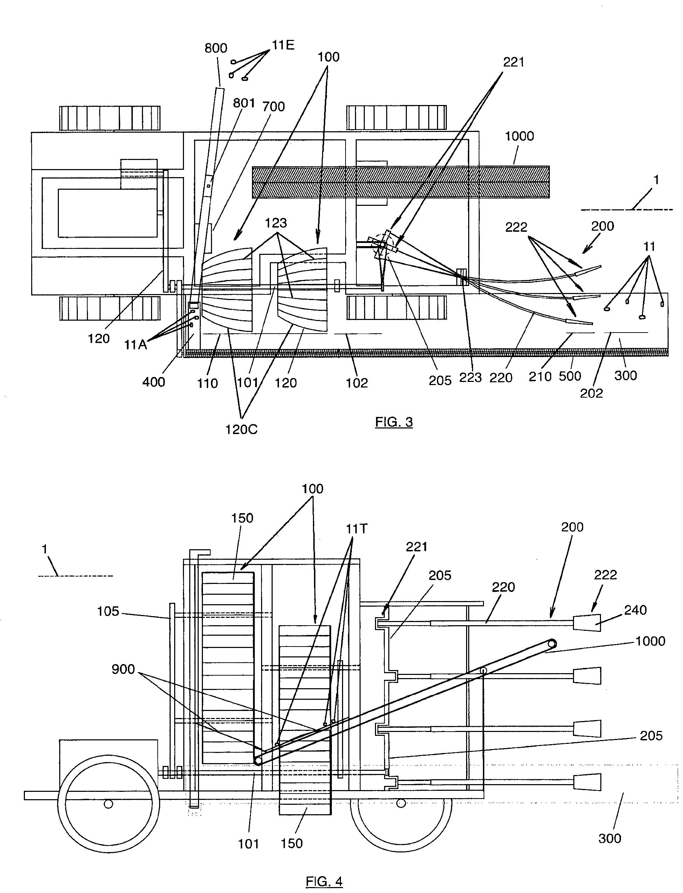

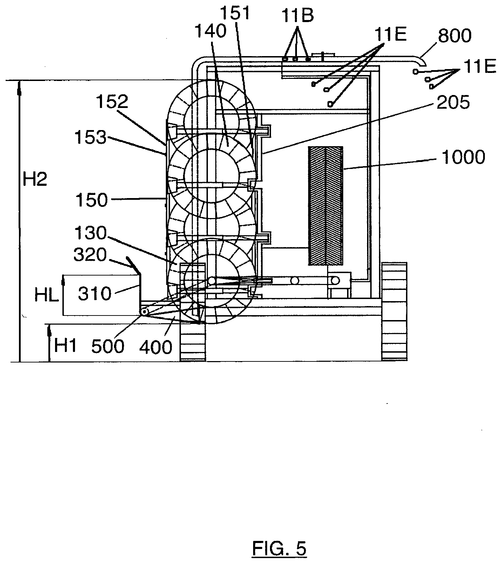

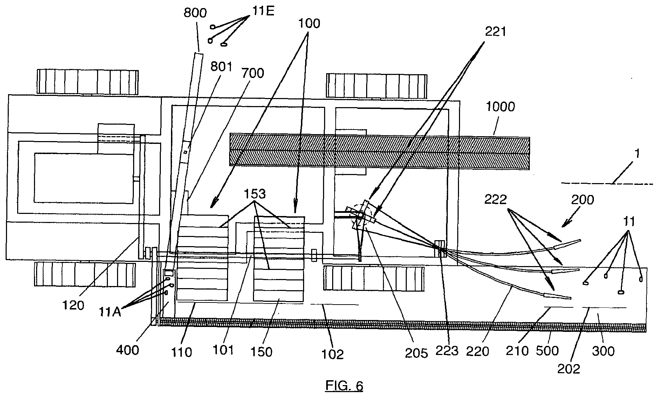

According to other features of the invention:
2a) The first harvesting/collection section (110) is moved in a first harvesting plane (102) parallel to the main axis of displacement (1).
3. The harvester comprises:
   3a) second means of harvest/collection (200) comprising:
      3a1) a second harvesting/collection section (210) configured to face a plantation comprising fruits to be harvested (10);
      3a2) second driving means (205) to move the second harvesting/collection section (210) and to obtain harvested fruits (11).
   4a) The second means of harvesting/collection (200) comprises a second harvesting/collection axis (201) perpendicular to the main axis of displacement (1).
   5a) The second harvesting/collection section (210) is moved in a second harvesting plane (202) parallel to the main axis of displacement (1).
   6a) The first harvesting plane (102) and the second harvesting plane (202) are aligned along the main axis of displacement (1).
   7a) The first means of harvest/collection (100) are arranged to strike the plantation firstly in accordance with the main axis of displacement (1);
   7b) The second means of harvest/collection (100) are arranged to strike the plantation secondly in accordance with the main axis of movement (1).
   8a) The first harvesting/collection section (110) extends between a lower height (H1) and an upper height (H2) configured to cover a harvest height at least equal to a height of the plantation.
   9a) The second harvesting/collection section (210) extends between a lower height (H1) and an upper height (H2) configured to cover a harvest height at least equal to a height of the plantation.
   9') The first means of harvest/collection (100) and the second means of harvest/collection (200) are interleaved in height to cover a height extended between a lower height (H1) and an upper height (H2) configured to cover a harvest height at least equal to a height of the plantation.
10. The harvester comprises:
   10a) collection means (300) for collecting the harvested fruits (11). The collection means (300) may be constituted by a side longitudinal tray arranged at a collection height (HR) for collecting the harvested fruits (11). In one embodiment shown in Figures 1-3, the collection means (300) are below the first means of harvest/collection (100) and the second means of harvest/collection (200). In the embodiment shown in Figures 1-3, the collection means (300) cover the entire length of the first means of harvest/collection (100) and the second harvest/collection means (200) and even extend further towards the rear of the harvester.
   11a) The collection means (300) comprises an outer wall (310) having a side height (HL) configured to prevent an overflow of harvested fruits (11).
   12a) The outer wall (310) is vertical. Figure 2 shows that when the outer wall (310) is vertical, full advantage of the space between the harvester and the plantation is taken in order to maximize the ratio between the harvested fruits (11) and the fruits to be harvested (10), since the first means of harvest/collection (100) and the second means of harvest/collection (200) may be closer to the plantation.
   13a) The outer wall (310) comprises a flexible upper lip (320) projected toward an outside of the harvester. As shown in Figure 2, the lip (320) increases the ratio of the harvested fruits (11) to the fruits to be harvested (10) since it prevents a gap between the outer wall (310) and the ground if the screen (2300) is not located above the collection means (300), redirecting the fruits that could fall to the ground towards the collection means (300).
14. The harvester comprises:
   14a) Accumulation means (400) for accumulating the harvested fruits (11) from the collection means (300) and obtaining accumulated fruits (11A). In one embodiment illustrated in Figures 1-3, the accumulation means (400) are constituted by a drawer flush with the collection means (300). Flush means that the bottom of the collection means (300) flows into the accumulation means (400). In addition, the collection means (300) may fall towards the accumulation means (400) to facilitate conduction of the harvested fruits (11) from the collection means (300) to the accumulation means (400).
15. The harvester comprises:
   15a) means of transport (500) for conveying the harvested fruits (11) of the collection means (300) to the accumulation means (400) and obtaining accumulated fruits (11A). The means of transport (500) may consist of a worm screw as shown in Figures 2-3 or a conveyor belt. The collection means (300) may fall towards the means of transport (500) as shown in Figure 2, wherein the collection means have a bottom inclined towards the worm screw; the drop of the collection means (300) towards the transport means (500) facilitates the conveyance of the harvested fruits (11) from the collection means (300) to the means of transport (500).
16 The harvester comprises:
   16a) pumping means (700) to pump the accumulated fruits (11A) and obtain pumped fruits (11B).
17. The harvester comprises:
   17a) evacuation means (800) to evacuate the pumped fruits (11 B) and obtain evacuated fruit (11E). Figure 1 shows that the pumping means feeds the evacuation means (800) with pumped fruits (11 B) so that the evacuated fruit (11 E) can then be discharged by the evacuation means (800) depending on the position of the directing means (801) or to an auxiliary trailer that can circulate with the harvester, or to an internal storage tank built in the harvester itself, constituted in the storage means (900).
18. The harvester comprises:
   18a) Storage means (900) for storing the evacuated fruits (11 E) and obtaining stored fruit (11T). Figures 2-3 show that the evacuation means (800) has two openings: an inner opening (801) for discharge to the storage means (900) and an outer opening (802) for discharge to an auxiliary discharge trailer. Thus, depending on different needs such as the space available in the plantation for the machinery or the amount of fruit to be harvested, it is possible to choose between externally discharge the fruits as they are harvested or store them in the harvester for later discharge.
19. The harvester comprises:
   19a) emptying means (1000) for extracting the stored fruit (11T). Figures 2-3 show the emptying means (1000) which allow discharging the stored fruit (11T) to empty the storage means (900). In one embodiment of the invention, the emptying means (1000) may be a conveyor belt having a drain end (1010) connected to the storage means (900) and a free evacuation end (1020) through which it is emptied the stored fruits (11T).
20a) In a first embodiment of the invention illustrated in Figures 1-3, the first means of harvest/collection (100) comprise:
   20a1) a drum (120) configured to:
      20a1 a) rotate around the first harvesting/collection axis (101).
      20a1b) strike the plantation with a contour (120C) of the drum (120).
21a) The drum (120) comprises:
   21a) a first base (121) having a first perimeter;
   21b) a second base (122) having a second perimeter greater than the first perimeter.
22a) The first base (121) is arranged to strike the plantation firstly in accordance with the main axis of displacement (1);
22b) The second base (122) is arranged to strike the plantation secondly in accordance with the main axis of displacement (1).
23a) The contour (120C) of the drum (120) is curved-convex.
24a) The contour (120C) of the drum (120) comprises a plurality of first protrusions (123).
25a) In a second embodiment of the invention illustrated in Figures 4-6, the first means of harvest/collection (100) comprise:
   25a1) a driving pulley (130);
   25a2) a driven pulley (140);
   25a3) a belt (150) driven between the driving pulley (130) and the driven pulley (140) having:
      25a3a) a trailing section (151) configured to be driven by the driving pulley (130);
      25a3b) a leading section (152) configured to pull up the fruits to be harvested (10). The strap illustrated in Figures 4-6 ensures a full coverage of the harvest height between the lower height (H1) and the upper height (H2).
26a) The belt (150) comprises a plurality of second protrusions (153) at the leading section (152).
27a) The second means of harvest/collection (200) comprise:
   27a1) a rod (220) having:
      27a1a) a driving end (221) connected to the second driving means (205);
      27a1b) a free harvesting end (222);
   27a2) a blade (240) at the harvesting end (222) configured to strike a plantation comprising fruits to be harvested (10). The second means of harvest/collection (200) illustrated in Figures 1-6 are especially useful for knocking down the fruits to be harvested (10) which may be found in more hidden branches. The rod (220) can pivot around a second axis (201) located between the driving end (221) and the harvest end (222).

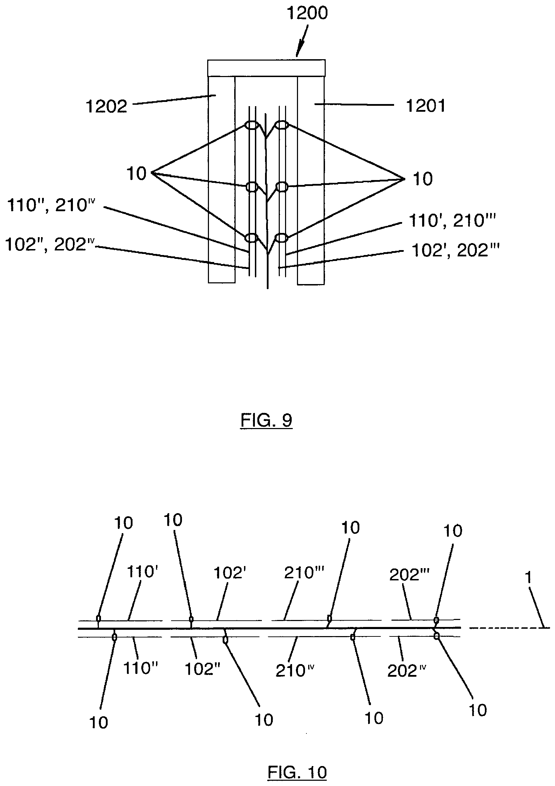

According to other features of the invention:
28. The harvester:
   28a) comprises first means of harvest/collection (100) at a location selected between a first side of the harvester, a second side of the harvester and both sides of the harvester.
   29a) comprises second means of harvest/collection (200) at a location selected between a first side of the harvester, a second side of the harvester and both sides of the harvester.
30. In a third embodiment of the invention illustrated in Figure 9, the harvester comprises:
   30a) a bridge-shaped structure (1200) configured to pass over a plantation in accordance with the main axis of displacement (1) comprising:
      30a1) a first column (1201) comprising:
         30a1a) a first bridge-shaped harvesting section (110I) configured to face a first bridge-shaped harvesting plane (102^{I});
      30a2) a second column (1202) comprising:
         30a2a) a second bridge-shaped harvesting section (110") configured to face a second bridge-shaped harvesting plane (102^{II})

According to other features of the invention:
31a1) the first column (1201) comprises:
   31a1a) a third bridge-shaped harvesting section (210^{III}) configured to face a third bridge-shaped harvesting plane (202^{III});
31a2) the second column (1202) comprises:
   31a2a) a fourth bridge-shaped harvesting section (210^{IV}) configured to face a fourth bridge-shaped harvesting plane (202^{IV}).

32. The harvester is configured to harvest olives.

A second aspect of the invention relates to a planting conditioning system for harvesting comprising:
33a) a main support (2000) comprising:
   33a1) an end of land (2010) configured to be placed on a land where the plantation is located;
   33a2) a first branch end (2020) configured to support a first branch (2021).

According to other features of the invention:
34. The plantation conditioning system for harvesting comprises:
   34a) a bracket (2100) comprising:
      34a1) a support end (2110) configured to be placed on the main support (2000);
      34a2) a second branch end (2120) configured to support a second branch (2121). The bracket (2100) provides better planting support and improves the harvesting process with the harvester of the invention.
35. The plantation conditioning system for harvesting comprises:
   35a) a longitudinal support (2200) comprising:
      35a1) a bracket section (2210) configured to be positioned over the second branch end (2120);
      35a2) a second branch section (2220) configured to support a second branch (2121). The longitudinal support (2200) provides improved planting support and improves the harvesting process with the harvester of the invention.
36. The plantation conditioning system for harvesting comprises:
   36a) a screen (2300) extending between:
      36a1) a lower screen height (H1');
         by not pulling the screen off the ground, the collection means (300) of the harvester of the invention are allowed to pass beneath the screen; In this way, it is ensured that the fruits to be harvested (10) fall on the collection means (300); the yield of the harvesting is further improved when the outer wall (310) passes behind the screen (2300), since this ensures that all the space from the screen (2300) is covered by the collection means (300);
      36a2) an upper screen height (H2 '). The screen is configured to encompass a screen height at least equal to a planting height.
37. The screen (2300) is opaque. As the screen is opaque, it favors the growth of the plantation from the screen towards the area receiving solar radiation. Consequently, the fruits to be harvested (10) are also forced to be born in the area of greatest exposure to solar radiation, improving harvesting yield, since the fruits to be harvested (10) have an optimal location in order for the means of harvest (100, 200) to pull them up from the plantation.

A third aspect of the invention relates to a method for preparing a plantation for harvesting by the harvester of the invention comprising:
38a) to prune the plantation to promote or facilitate the growth of the fruits to be harvested (10) in a plantation plane (1202, 1202A, 1202B) parallel to a harvesting section (110, 210, 110A, 210A, 110B, 210B).

According to other features of the invention, the method for preparing the plantation comprises:
39a) to guide the plantation to orient a fruit growth to be harvested (10) in a plantation plane (1202, 1202A, 1202B) parallel to a harvesting section (110, 210, 110A, 210A, 110B, 210B).
40a) Prune the plantation to maintain a second flexible branch (2121).

The pruning and guiding of the plantation allows controlling the growth of the plantation so that this growth is in the form of tufts, that is to say, that the production of branches in the plantation is controlled so that they resemble the branches of the weeping willows. This configuration is optimal for fruit harvesting by the harvester of the invention. That is, the system for conditioning the plantation, the method for preparing the plantation and the harvester are three complementary elements whose combination allows achieving a synergistic effect to increase the yield in the fruit harvesting.

## Claims

1. A harvester comprising:
1a) a main axis of displacement (1) of the harvester;
1b) first means of harvest (100) comprising:
1b1) a first harvesting section (110) configured to face a plantation comprising fruits to be harvested (10);
1b2) first driving means (105) for moving the first harvesting section (110) and obtaining harvested fruits (11);
**characterized in that:**
1d) the first means of harvest (100) comprises a first harvesting axis (101) parallel to the main axis of displacement (1).

2. Harvester according to claim 1, **characterized in that:**
2a) the first harvesting section (110) moves in a first harvesting plane (102) parallel to the main axis of displacement (1).

3. Harvester according to claim 1, **characterized in that** it comprises:
3a) second harvesting means (200) comprising:
3a1) a second harvesting section (210) configured to face a plantation comprising fruits to be harvested (10);
3a2) second driving means (205) for moving the second harvesting section (210) and obtaining harvested fruits (11).

4. Harvester according to claim 3, **characterized In that:**
4a) the second harvesting means (200) comprises a second harvesting axis (201) perpendicular to the main axis of displacement (1).

5. Harvester according to claim 3, **characterized in that:**
5a) the second harvesting section (210) is moved in a second harvesting plane (202) parallel to the main axis of displacement (1).

6. Harvester according to claim 5, **characterized in that** it comprises:
6a) the first harvesting section (102) and the second harvesting plane (202) are aligned in accordance with the main axis of displacement (1).

7. Harvester according to claim 6, **characterized in that:**
7a) the first means of harvest (100) are arranged to strike the plantation firstly in accordance with the main axis of displacement (1);
7b) the second means of harvest (200) are arranged to strike the plantation secondly in accordance with the main axis of displacement (1).

8. Harvester according to claim 1, **characterized in that:**
8a) the first harvesting section (110) extends between a lower height (H1) and an upper height (H2) configured to cover a harvest height at least equal to a height of the plantation.

9. Harvester according to claim 3, **characterized in that** it comprises:
9a) the second harvesting section (210) extends between a lower height (H1) and an upper height (H2) configured to cover a harvest height at least equal to a height of the plantation.

10. Harvester according to claim 1, **characterized in that** it comprises:
10a) collection means (300) for collecting the harvested fruits (11).

11. Harvester according to claim 10, **characterized in that:**
11a) the collection means (300) comprise an outer wall (310) having a side height (HL) configured to prevent overflow of harvested fruits (11).

12. Harvester according to claim 11, **characterized in that:**
12a) the outer wall (310) is vertical.

13. Harvester according to claim 12, **characterized in that:**
13a) the outer wall (310) comprises a flexible upper lip (320) projected toward an exterior of the harvester.

14. Harvester according to claim 10, **characterized in that** it comprises:
14a) accumulation means (400) for accumulating the harvested fruits (11) from the collection means (300) and obtaining accumulated fruits (11A).

15. Harvester according to claim 10, **characterized in that** it comprises:
15a) means of transport (500) for conveying the harvested fruits (11) of the collection means (300) to the accumulation means (400) and obtaining accumulated fruit (11A).

16. Harvester according to claim 14, **characterized in that** it comprises:
16a) pumping means (700) for pumping the accumulated fruits (11A) and obtaining pumped fruits (11B).

17. Harvester according to claim 16, **characterized in that** it comprises:
17a) evacuation means (800) for evacuating the pumped fruits (11B) to obtain evacuated fruits (11E).

18. Harvester according to claim 17, **characterized in that** it comprises:
18a) storing means (900) for storing the evacuated fruit (11E) and obtaining stored fruit (11T).

19. Harvester according to claim 18 **characterized in that:**
19a) emptying means (1000) for extracting the stored fruit (11T).

20. Harvester according to claim 1 **characterized In that:**
20a) the first means of harvest (100) comprise:
20a1) a drum (120) configured to:
20a1a) rotate around the first axis of harvest (101).
20a1b) strike the plantation with a contour (120C) of the drum (120).

21. Harvester according to claim 20 **characterized in that:**
21a) the drum (120) comprises:
21a) a first base (121) having a first perimeter;
21b) a second base (122) having a second perimeter greater than the first perimeter.

22. Harvester according to claim 21 **characterized in that:**
22a) the first base (121) is arranged to strike the plantation firstly according to the main axis of displacement (1);
21b) the second base (122) is arranged to strike the plantation secondly according to the main axis of displacement (1).

23. Harvester according to claim 20 **characterized in that:**
23a) the contour (120C) of the drum (120) is curved convex.

24. Harvester according to claim 20 **characterized in that:**
24a) the contour (120C) of the drum (120) comprises a plurality of first protrusions (123).

25. Harvester according to claim 1 **characterized in that:**
25a) the first means of harvest (100) comprise:
25a1) a driving pulley (130);
25a2) a driven pulley (140);
25a3) a belt (150) driven between the driving pulley (130) and the driven pulley (140) having:
25a3a) trailing section (151) configured to be driven by the driving pulley (130);
25a3b) a leading section (152) configured to pull up the fruits to be harvested (10).

26. Harvester according to claim 25 **characterized In that:**
26a) the belt (150) comprises a plurality of second protrusions (153) on the leading section (152).

27. Harvester according to claim 3 **characterized by:**
27a) the second means of harvest (200) comprise:
27a1) a rod (220) having:
27a1a) a driving end (221) connected to the second driving means (205);
27a1b) a free harvesting end (222);
27a2) a blade (240) at the end of harvest (222) configured to strike a plantation comprising fruits to be harvested (10).

28. Harvester according to claim 1 **characterized by:**
28a) comprising first means of harvest (100) at a selected location between a first side of the harvester, a second side of the harvester and both sides of the harvester.

29. Harvester according to claim 3 **characterized by:**
29a) comprising second means of harvest (200) at a selected location between a first side of the harvester, a second side of the harvester and both sides of the harvester.

30. Harvester according to claim 5 **characterized in that** it comprises:
30a) A bridge-shaped structure (1200) configured to pass over a plantation in accordance with the main axis of displacement (1) comprising:
30a1) a first column (1201) comprising:
30a1a) a first bridge-shaped harvesting section (110^{I}) configured to face a first bridge-shaped harvesting plane (102^{I});
30a2) a second column (1202) comprising:
30a2a) a second bridge-shaped harvesting section (110^{II}) configured to face a second bridge-shaped harvesting plane (102^{II}).

31. Harvester according to claim 30 **characterized in that:**
31a1) the first column (1201) comprises:
31a1a) a third bridge-shaped harvesting section (210^{III}) configured to face a third bridge-shaped harvesting plane (202^{III});
31a2) the second column (1202) comprises:
31a2a) a fourth bridge-shaped harvesting section (210^{IV}) configured to face a fourth bridge-shaped harvesting plane (202^{IV}).

32. Harvester according to claim 1 **characterized in that** it is configured to harvest olives.

33. System for conditioning a plantation for harvesting with the harvester according to any of claims 1-32 **characterized in that** it comprises:
33a) a main support (2000) comprising:
33a1) one end of land (2010) configured to be placed on a land where the plantation is located;
33a2) one end of first branch (2020) configured to support a first branch (2021).

34. System for conditioning a plantation for harvesting according to claim 33 **characterized in that** it comprises:
34a) a bracket (2100) comprising:
34a1) a supporting end (2110) configured to be placed on the main support (2000);
34a2) one end of second branch (2120) configured to support a second branch (2121).

35. System for conditioning a plantation for harvesting according to claim 34 **characterized in that** it comprises:
35a) longitudinal support (2200) comprising:
35a1) one bracket section (2210) configured to be positioned over the end of the second branch (2120);
35a2) one second branch section (2220) configured to support a second branch (2121).

36. System for conditioning a plantation for harvesting according to claim 33 **characterized in that** it comprises:
36a) a screen (2300) extended between:
36a1) a lower screen height (H1');
36a2) an upper screen height (H2').

37. System for conditioning a plantation for harvesting according to claim 36 **characterized in that** the screen (2300) is opaque.

38. Method for preparing a plantation for harvesting with the harvester according to any of claims 3-32 **characterized in that** it comprises:
38a) Pruning the plantation in order to promote growth of the fruits to be harvested (10) in a plane of plantation (102, 102') parallel to one harvesting section (110, 210, 110', 210').

39. Method for preparing a plantation for harvesting with the harvester according to any of claims 3-32 **characterized in that** it comprises:
39a) Guiding the plantation in order to orientate growth of the fruits to be harvested (10) in a plane of plantation (102, 102') parallel to one harvesting section (110, 210, 110', 210').

40. Method for preparing a plantation for harvesting with the harvester according to any of claims 3-32 **characterized in that** it comprises:
40a) Pruning the plantation in order to maintain a second branch (2121) flexible.

## Amended claims

### Amended claims under Art. 19.1 PCT

1. A harvester comprising:
1a) a main axis of displacement (1) of the harvester;
1b) first means of harvest (100) comprising:
1b1) a first harvesting section (110) configured to face a plantation comprising fruits to be harvested (10);
1b2) first driving means (105) for moving the first harvesting section (110) and obtaining harvested fruits (11);
**characterized in that:**
1c) the first means of harvest (100) comprises a first harvesting axis (101) parallel to the main axis of displacement (1) and wherein
1d) the first harvesting section (110) is moved in a first harvesting plane (102) parallel to the main axis of displacement (1).

2. Harvester according to claim 1, **characterized in that** it comprises:
2a) second harvesting means (200) comprising:
2a1) a second harvesting section (210) configured to face a plantation comprising fruits to be harvested (10);
2a2) second driving means (205) for moving the second harvesting section (210) and obtaining harvested fruits (11).

3. Harvester according to claim 2, **characterized in that** it comprises:
3a) second means of harvest (200) comprising a second harvesting axis (201) perpendicular to the main axis of displacement (1).

4. Harvester according to claim 2, **characterized in that:**
4a) the second harvesting section (210) is moved in a second harvesting plane (202) parallel to the main axis of displacement (1).

5. Harvester according to claim 4, **characterized in that** it comprises:
5a) the first harvesting plane (102) and the second harvesting plane (202) are aligned in accordance with the main axis of displacement (1).

6. Harvester according to claim 5, **characterized in that** it comprises:
6a) the first means of harvest (100) are arranged to strike the plantation firstly in accordance with the main axis of displacement (1);
6b) the second means of harvest (200) are arranged to strike the plantation secondly in accordance with the main axis of displacement (1).

7. Harvester according to claim 1, **characterized in that:**
7a) the first harvesting section (110) extends between a lower height (H1) and an upper height (H2) configured to cover a harvest height at least equal to a height of the plantation.

8. Harvester according to claim 2, **characterized in that:**
8a) the second harvesting section (210) extends between a lower height (H1) and an upper height (H2) configured to cover a harvest height at least equal to a height of the plantation.

9. Harvester according to claim 1, **characterized in that** it comprises:
9a) collection means (300) for collecting the harvested fruits (11).

10. Harvester according to claim 9, **characterized in that:**
10a) the collection means (300) comprise an outer wall (310) having a side height (HL) configured to prevent overflow of harvested fruits (11).

11. Harvester according to claim 10, **characterized in that:**
11a) the outer wall (310) is vertical.

12. Harvester according to claim 11, **characterized in that:**
12a) the outer wall (310) comprises a flexible upper lip (320) projected toward an exterior of the harvester.

13. Harvester according to claim 9, **characterized in that** it comprises:
13a) accumulation means (400) for accumulating the harvested fruits (11) from the collection means (300) and obtaining accumulated fruits (11A).

14. Harvester according to claim 9, **characterized in that** it comprises:
14a) means of transport (500) for conveying the harvested fruits (11) of the collection means (300) to the accumulation means (400) and obtaining accumulated fruit (11A).

15. Harvester according to claim 13, **characterized in that** it comprises:
15a) pumping means (700) for pumping the accumulated fruits (11A) and obtaining pumped fruits (11 B).

16. Harvester according to claim 15, **characterized in that** it comprises:
17a) evacuation means (800) for evacuating the pumped fruits (11 B) to obtain evacuated fruits (11E).

17. Harvester according to claim 16, **characterized in that** it comprises:
17a) storing means (900) for storing the evacuated fruit (11 E) and obtaining stored fruit (11T).

18. Harvester according to claim 17, **characterized in that** it comprises:
18a) emptying means (1000) for extracting the stored fruit (11T).

19. Harvester according to claim 1 **characterized in that:**
19a) the first means of harvest (100) comprise:
19a1) a drum (120) configured to:
19a1a) rotate around the first axis of harvest (101).
19a1b) strike the plantation with a contour (120C) of the drum (120).

20. Harvester according to claim 19 **characterized in that:**
20a) the drum (120) comprises:
20a) a first base (121) having a first perimeter;
20b) a second base (122) having a second perimeter greater than the first perimeter.

21. Harvester according to claim 20 **characterized in that:**
21a) the first base (121) is arranged to strike the plantation firstly according to the main axis of displacement (1);
21b) the second base (122) is arranged to strike the plantation secondly according to the main axis of displacement (1).

22. Harvester according to claim 19 **characterized in that:**
22a) the contour (120C) of the drum (120) is curved convex.

23. Harvester according to claim 19 **characterized in that:**
23a) the contour (120C) of the drum (120) comprises a plurality of first protrusions (123).

24. Harvester according to claim 1 **characterized in that:**
24a) the first means of harvest (100) comprise:
24a1) a driving pulley (130);
24a2) a driven pulley (140);
24a3) a belt (150) driven between the driving pulley (130) and the driven pulley (140) having:
24a3a) trailing section (151) configured to be driven by the driving pulley (130);
24a3b) a leading section (152) configured to pull up the fruits to be harvested10).

25. Harvester according to claim 24 **characterized in that:**
25a) the belt (150) comprises a plurality of second protrusions (153) on the leading section (152).

26. Harvester according to claim 2 **characterized in that:**
26a) the second means of harvest (200) comprise:
26a1) a rod (220) having:
26a1a) a driving end (221) connected to the second driving means (205);
26a1b) a free harvesting end (222);
26a2) a blade (240) at the end of harvest (222) configured to strike a plantation comprising fruits to be harvested (10).

27. Harvester according to claim 1 **characterized by:**
27a) comprising first means of harvest (100) at a selected location between a first side of the harvester, a second side of the harvester and both sides of the harvester.

28. Harvester according to claim 2 **characterized by:**
28a) comprising second means of harvest (200) at a selected location between a first side of the harvester, a second side of the harvester and both sides of the harvester.

29. Harvester according to claim 4 **characterized in that comprises:**
29a) A bridge-shaped structure (1200) configured to pass over a plantation in accordance with the main axis of displacement (1) comprising:
29a1) a first column (1201) comprising:
29a1a) a first bridge-shaped harvesting section (110^{I}) configured to face a first bridge-shaped harvesting plane (102^{I});
29a2) a second column (1202) comprising:
29a2a) a second bridge-shaped harvesting section (110") configured to face a second bridge-shaped harvesting plane (102^{II}).

30. Harvester according to claim 29 **characterized in that:**
30a1) the first column (1201) comprises:
30a1a) a third bridge-shaped harvesting section (210^{III}) configured to face a third bridge-shaped harvesting plane (202^{III});
30a2) the second column (1202) comprises:
30a2a) a fourth bridge-shaped harvesting section (210^{IV}) configured to face a fourth bridge-shaped harvesting plane (202^{IV}).

31. Harvester according to claim 1 **characterized in that** it is configured to harvest olives.

32. System for conditioning a plantation for harvesting with the harvester according to any of claims 1-31 **characterized in that** it comprises:
32a) a main support (2000) comprising:
32a1) one end of land (2010) configured to be placed on a land where the plantation is located;
32a2) one end of first branch (2020) configured to support a first branch (2021).

33. System for conditioning a plantation for harvesting according to claim 32 **characterized in that** it comprises:
33a) a bracket (2100) comprising:
33a1) a supporting end (2110) configured to be placed on the main support (2000);
33a2) one end of second branch (2120) configured to support a second branch (2121).

34. System for conditioning a plantation for harvesting according to claim 33 **characterized in that** it comprises:
34a) longitudinal support (2200) comprising:
34a1) one bracket section (2210) configured to be positioned over the end of the second branch (2120);
34a2) one second branch section (2220) configured to support a second branch (2121).

35. System for conditioning a plantation for harvesting according to claim 32 **characterized in that** it comprises:
35a) a screen (2300) extended between:
35a1) a lower screen height (H1');
35a2) an upper screen height (H2').

36. System for conditioning a plantation for harvesting according to claim 35 **characterized in that** the screen (2300) is opaque.

37. Method for preparing a plantation for harvesting according to any of claims 2-31 **characterized in that** it comprises:
37a) Pruning the plantation in order to promote growth of the fruits to be harvested (10) in a plane of plantation (102, 102') parallel to one harvesting section (110, 210, 110', 210').

38. Method for preparing a plantation for harvesting according to any of claims 2-31 **characterized in that** it comprises:
38a) Guiding the plantation in order to orientate growth of the fruits to be harvested (10) in a plane of plantation (102, 102') parallel to one harvesting section (110, 210, 110', 210').

39. Method for preparing a plantation for harvesting with the harvester according to any of claims 2-31 **characterized in that** it comprises:
39a) Pruning the plantation in order to maintain a second branch (2121) flexible.
